# EUROPÄISCHE PATENTSCHRIFT

(11) **EP 1 185 803 B1**
(45) Veröffentlichungstag und Bekanntmachung des Hinweises auf die Patenterteilung: **07.05.2003**
(21) Anmeldenummer: 01911567.4
(22) Anmeldetag: 01.02.2001
(51) Int. Cl.: F16H 7/06, F01L 1/02

(54) **KETTENTRIEB, INSBESONDERE NOCKENWELLEN/NOCKENWELLENTRIEB FÜR EINEN KRAFTFAHRZEUGMOTOR**
CHAIN DRIVE, ESPECIALLY A CAMSHAFT/CAMSHAFT DRIVE FOR A MOTOR VEHICLE
TRANSMISSION PAR CHAINE, NOTAMMENT ENTRAINEMENT ARBRE A CAMES/ARBRE A CAMES, D'UN MOTEUR DE VEHICULE AUTOMOBILE

(30) Priorität: 19.04.2000 DE 10019458
(43) Veröffentlichungstag der Anmeldung: 13.03.2002
(73) Patentinhaber: JOH. WINKLHOFER & SÖHNE GmbH & Co KG, D-81369 München (DE)
(72) Erfinder: FINK, Thomas, 85221 Dachau (DE); SCHULZE, Peter, 85386 Eching (DE)
(74) Vertreter: Grünecker, Kinkeldey, Stockmair & Schwanhäusser Anwaltssozietät
(86) Internationale Anmeldenummer: EP0101050
(87) Internationale Veröffentlichungsnummer: WO01081790

(56) Entgegenhaltungen:
- EP-A- 0 575 044
- DE-A- 3 347 638
- DE-A- 4 118 862
- PATENT ABSTRACTS OF JAPAN vol. 007, no. 068 (M-201), 19. März 1983 (1983-03-19) & JP 57 210109 A (SUZUKI JIDOSHA KOGYO KK), 23. Dezember 1982 (1982-12-23)

## Beschreibung

Die vorliegende Erfindung betrifft einen Kettentrieb, insbesondere Nockenwellen/Nockenwellentrieb für einen Kraftfahrzeugmotor, mit mindestens zwei Kettenrädern und einer Antriebskette.

Insbesondere auf dem Gebiet der Verbrennungsmotoren werden gut funktionierende Steuerkettentriebe benötigt. In diesem Zusammenhang bestehen große Anforderungen an die Geräuscharmut solcher Kettentriebe, so dass zahlreiche Maßnahmen zur Vermeidung von unnötigen Schwingungen und dadurch verursachten Laufgeräuschen unternommen werden. Es ist allgemein bekannt, dass bei größeren Zähnezahlen der Kettenräder mit einem ruhigeren Lauf zu rechnen ist, weshalb ungern auf kleinere Kettenradgrößen ausgewichen wird. Auf der anderen Seite besteht immer mehr das Bestreben, kompaktere Verbrennungsmotoren und dafür erforderliche Kettentriebe bereitzustellen. Bei einem Nockenwellen/Nockenwellentrieb für einen Kraftfahrzeugmotor sind allein durch den Achsabstand der beiden Nockenwellen Grenzen gesetzt, die es zu beachten gilt.

Es ist daher die Aufgabe der vorliegenden Erfindung, einen Kettentrieb der eingangs genannten Art bezüglich seiner Kompaktheit zu verbessern, wobei Geräuschaspekte oder Verschleißaspekte Beachtung finden sollen.

Aus EP-A-O 575 044, die einen gattungsgemäβen kettentrieb beschreibt, ist bekannt, dass mindestens zwei Kettenräder in Achsrichtung seitlich zueinander versetzt angeordnet sind, die Antriebskette eine Mehrfachkette ist, jedem der versetzten Kettenräder durch den seitlichen Versatz eine eigene Spur der Mehrfachkette zugeordnet ist und sich die Kopfkreisdurchmesser der versetzten Zahnräder überdecken. Mehrfachketten werden üblicherweise nur dort angewendet, wo sie mit einem Mehrfach-Kettenrad in Eingriff stehen, um größere Kräfte übertragen zu können. Hier wird jedoch eine Mehrfachkette dazu verwendet, seitlich zueinander versetzte Kettenräder gleichzeitig anzutreiben und zwar in der Form, dass sich die Kettenräder sogar überdecken. Eine solche Überdeckung wäre bei normaler Anordnung ohne seitlichen Versatz selbstverständlich nicht möglich. Gleichzeitig kann jedoch die Zähnezahl der Kettenräder, obwohl des an sich zu kleinen Abstandes der Achsen, groß gehalten werden, um einen möglichst ruhigen Lauf der Mehrfachkette zu erhalten. Durch diese Anordnung wäre es theoretisch möglich, die Kettenräder sich soweit überdecken zu lassen, dass die Verzahnung des einen Kettenrades beinahe die Achse des anderen Kettenrades berührt. Vermeidet man einen Überstand der Achsen, wäre sogar eine noch größere Überdeckung denkbar. Die beiden Kettenräder sollen jedoch nicht auf einer gemeinsamen Achse bzw. Welle sitzen, sondern unterschiedliche Elemente (z.B. Nockenwellen) antreiben. In Abhängigkeit der Anzahl der Spuren der Mehrfachkette kann die Anzahl der versetzten Kettenräder gewählt werden. Die Kettenräder können unterschiedliche Zähnezahlen aufweisen.

Erfindungsgemäß wird die Aufgabe dadurch gelöst, daß unter Vermeidung von Kippmomenten seitlich neben der Verzahnungen der überdeckenden Kettenräder jeweils eine Abstützeinrichtung für die nicht mit dem zugeordneten Kettenrad in Eingriff stehende Leerspur der Mehrfachkette vorgesehen ist. Der Kraftangriff des Kettenrades an der Mehrfachkette erfolgt asymmetrisch zur Längsmittellinie der Mehrfachkette, so dass auf diese entsprechende asymmetrische Kräfte einwirken. Abstützeinrichtungen helfen dabei, dass ein seitliches Kippen der Mehrfachkette nicht stattfindet, wodurch die Geräusche nochmals minimiert werden können, da diesbezügliche Schwingungen unterdrückt werden.

Unter Leerspur ist jeweils der sich seitlich neben einem Kettenrad befindliche, nicht mit diesem in Eingriff stehende Teil der Mehrfachkette gemeint. Diese Spur steht natürlich mit dem jeweils anderen Kettenrad in Eingriff.

Sofern eine Abstützung der Leerspur durch die Kettenräder selbst erfolgen soll, so sind dieser Grenzen gesetzt. Bei einer Ausführungsform ist daher bevorzugt, dass eine Überdeckung der Kettenräder größer ist als die Summe aus der Höhe der Laschen der Mehrfachkette und der Differenz aus Kopfkreisradius abzüglich Teilkreisradius. Eine am Kettenrad integrierte Abstützeinrichtung würde bei einer solchen Bemessungsregel mit der Verzahnung des jeweils anderen Kettenrades in Berührung kommen.

Gemäß einer weiteren Ausführungsform ist daher vorgesehen, dass als Abstützeinrichtung Gleitschienen vorgesehen sind. Diese stehen in aller Regel relativ zu den Kettenrädern still und die Leerspur gleitet an diesen entlang. Gleitschienen werden für die unterschiedlichsten Zwecke bei Kettentrieben schon seit langem eingesetzt, so dass die damit verbundenen Problematiken auf vielfältigste Weise bereits im Stand der Technik gelöst sind. Sowohl Materialien als auch, falls erforderlich, Schmiermittelzufuhr sind ohne weiteres für die Gleitschienen heranziehbar. Auch ein mehrteiliger Aufbau der Gleitschienen kann gewählt werden. Bekannt sind z.B. die Verwendung eines relativ stabilen Grundkörpers und eines darauf angeordneten, teilweise auch abnehm- und austauschbaren Gleitbeiags.

Bevorzugt kann ein Abstand der Gleitfläche der Gleitschiene zumindest im Bereich des Umschlingungswinkels der Mehrfachkette am zugeordneten Kettenrad zu dem Teilkreis des Kettenrades im Wesentlichen der halben Laschenhöhe oder einer halben Laufrollenhöhe entsprechen. Hier kommt es darauf an, ob die Laschen von der Abstützeinrichtung abgestützt oder die Rollen einer Mehrfachkette zur Abstützung herangezogen werden sollen. Die Bemessungsregel sorgt dafür, dass die Gelenkachsen der Mehrfachketten möglichst parallel zu den Achsen der Kettenräder ausgerichtet sind.

Ein großer Vorteil besteht gemäß einer weiteren Variante auch darin, dass die Gleitschiene eine Übergabeverlängerung aufweist, die die Leerspur der Mehrfachkette in dem Teilstück zwischen den überdeckenden Kettenrädern unterstützt. Trotz der Überdeckung der Kettenräder verbleibt in den meisten Fällen zwischen den beiden Rädern ein Teilstück, in dem die Mehrfachkette weder mit dem einen noch mit dem anderen Kettenrad in Eingriff steht. Damit es beim Auslauf aus dem einen Kettenrad und/oder dem Einlauf auf das andere Kettenrad nicht zu übermäßigen Schwingungen und den damit verbundenen Geräuschen kommt, ist auch für diesen Bereich eine Abstützung vorgesehen.

Günstigerweise können sich die Übergabeverlängerungen der den überdeckenden Kettenrädern zugeordneten Gleitschienen überdecken und gemeinsam die Mehrfachkette in dem Teilstück zwischen den überdeckenden Kettenrädern unterstützen. Wenn beide Gleitschienen solche Übergabeverlängerungen aufweisen, so wird auch in dem Zwischenstück zwischen den Kettenrädern eine Kippbewegung der Mehrfachkette vermieden, da diese über ihre gesamte Breite abgestützt ist.

Ein sanftes Ein- bzw. Auslaufen der Mehrfachkette ist dann gewährt, wenn gemäß einer Ausführungsform eine Gleitfläche der Übergabeverlängerung tangential in die angrenzende restliche Gleitfläche der Gleitschiene übergeht.

Damit die Gleitschiene ausreichend stabil ausgebildet werden kann und auch die Übergabeverlängerung möglichst steif auszubilden ist, ist eine zumindest die Übergabeverlängerung begrenzende Unterseite der Gleitschiene bogenförmig an die Außenkontur des anderen Kettenrades angepasst. Dies führt in einer besonderen Ausführungsform sogar soweit, dass die Mehrfachkette zwischen dem Auflauf auf das erste Kettenrad und dem Auslauf aus dem zweiten der sich überdeckenden Kettenräder vollständig abgestützt ist. Die Übergabeverlängerungen sind relativ nahe an das andere Kettenrad herangeführt, so dass sich jeweils nur kleine Bereiche ergeben, an denen die Leerspur nicht abgestützt ist. Jedoch ist in diesen Bereichen die Mehrfachkette jeweils durch die versetzt dazu angeordnete Übergabeverlängerung abgestützt. Die Unterseite der Übergabeverlängerung ist jeweils relativ nah an die Außenkontur des angrenzenden Kettenrades angepasst, so dass eine stabile Unterstützung der Gleitfläche unter Vermeidung einer zu filigranen Ausgestaltung möglich ist.

Des Weiteren ist es von Vorteil, wenn die Kettenräder die gleiche Größe und Zähnezahl aufweisen. Hier besteht insbesondere die Möglichkeit, auch die Gleitschienen identisch auszubilden und jeweils versetzt zueinander anzuordnen.

Im Folgenden wird eine Ausführungsform der vorliegenden Erfindung anhand einer Zeichnung näher erläutert. Es zeigen:
- Fig. 1: eine schematische Vorderansicht auf den oberen Teil eines Nockenwellen/Nockenwellenkettentriebs und
- Fig. 2: eine schematische Draufsicht auf den Kettentrieb aus Fig. 1, wobei die Gleitschienen der Übersichtlichkeit halber weggelassen sind.

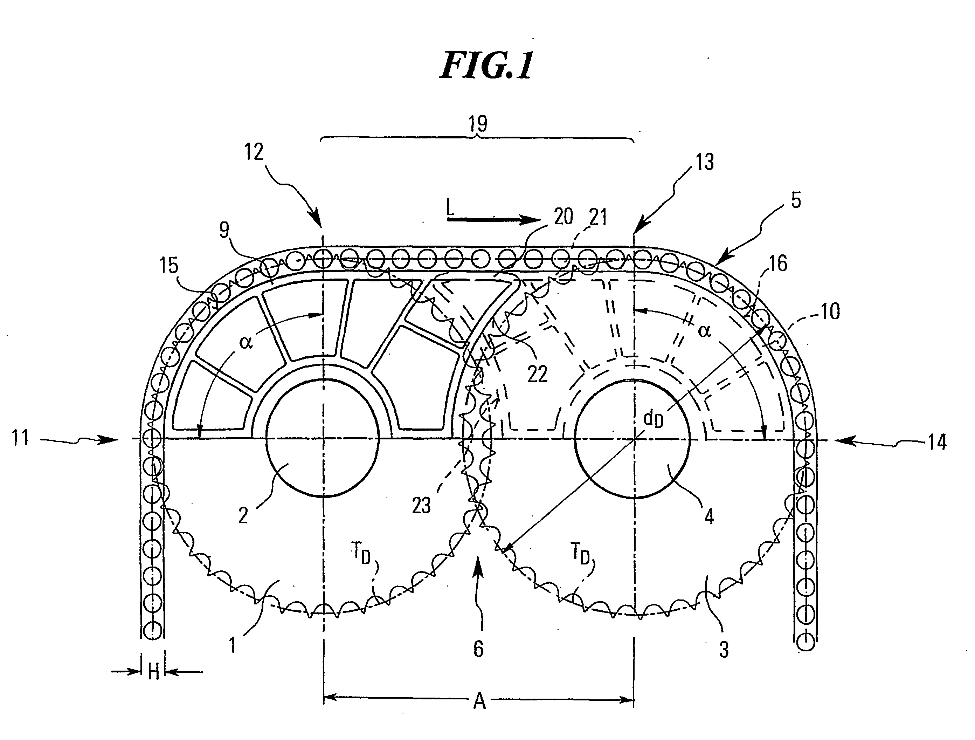

In Fig. 1 ist der obere Teile eines Nockenwellen/Nockenwellentriebs dargestellt. Das erste Kettenrad 1 sitzt auf einer ersten Nockenwelle 2 und das zweite Kettenrad 3 sitzt auf einer zweiten Nockenwelle 4. Die Verbindung der Kettenräder 1,3 mit den Nockenwellen 2,4 erfolgt mittels üblicher Verbindungsmethoden. Auf die Anordnung des Kettentriebs in einem Kettenkasten bzw. einem Motorschacht wird im Folgenden nicht näher eingegangen.

Im vorliegenden Ausführungsbeispiel weisen die Kettenräder 1,3 jeweils 40 Zähne auf. Die Teilung entspricht 9,525 mm.

Um die beiden Kettenräder 1,3 herumgeführt ist eine Duplexkette 5, die auch mit einem nicht dargestellten Zahnrad der Kurbelwelle in Eingriff steht. Bei der Duplexkette handelt sich um zwei parallel zueinander angeordnete, mittels eines Stiftbocks miteinander verbundenen Laschenrollenketten üblicher Bauart. Solche Duplexketten 5 werden auch als Zweifach-Rollenketten bezeichnet.

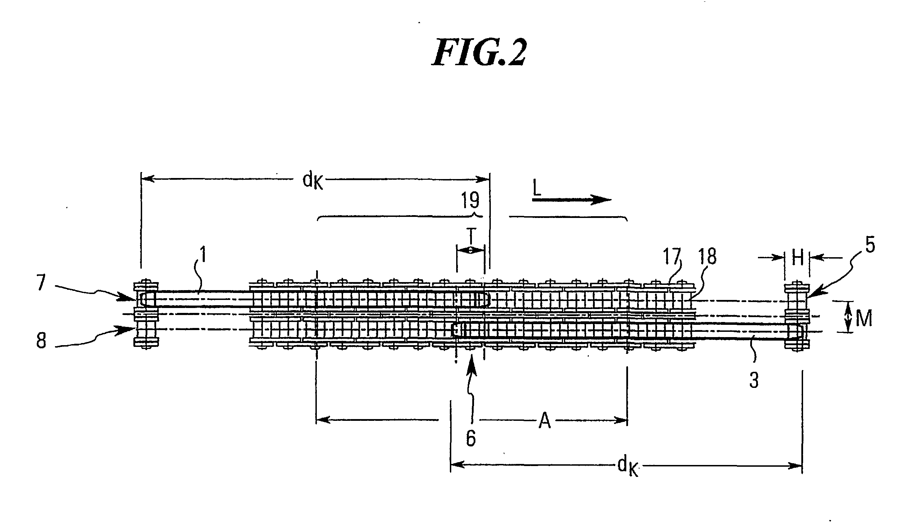

Der Achsabstand A der beiden Kettenradachsen ist so gewählt, dass es zu einer Überdeckung der beiden Kettenräder 1,3 kommt. Diese sind jedoch, wie anhand der Fig. 2 zu erkennen ist, in Achsrichtung gesehen, seitlich zueinander versetzt angeordnet, so dass sie in ihrem Überdeckungsbereich 6 nebeneinander angeordnet sind. Beim vorliegenden Ausführungsbeispiel befindet sich das Kettenrad 1 hinter dem Kettenrad 3 (ausgehend von Fig. 1). Der Mittenabstand M der beiden Kettenräder 1 und 3 zueinander entspricht auch dem zugehörigen Mittenabstand M der Duplexkette 5 und beträgt im vorliegenden Ausführungsbeispiel 10,34 mm. Dieser Mittenabstand M kann auch als Versatz der beiden Kettenräder 1,3 bezeichnet werden. Das Kettenrad 1 steht somit mit einer ersten Spur 7 und das Kettenrad 3 mit einer zweiten Spur 8 der Duplexkette 5 in Eingriff. Da jedem dieser Kettenräder 1,3 eine eigene Spur 7,8 zugeordnet ist, kann ein Überdeckungsbereich 6 bereitgestellt werden. In Fig. 2 ist die Überdeckung T der Teilkreise T_{D} der beiden Kettenräder 1,3 dargestellt. Bei diesem Ausführungsbeispiel beträgt T gleich 10 mm. Für eine im Folgenden noch näher zu beschreibende Abstützung sind jedoch auch noch die Kopfkreisdurchmesser d_{K} der beiden Kettenräder 1,3 zu beachten.

Jeweils seitlich neben einem Kettenrad 1 oder 3 befindet sich eine Gleitschiene 9 bzw. 10.

Geht man im vorliegenden Beispiel davon aus, dass die Laufrichtung der Kette L im Uhrzeigersinn erfolgt, so beträgt der Umschlingungswinkel α der Duplexkette 5 beim ersten Kettenrad 1 zwischen Auflauf 11 und Auslauf 12 90°. Gleiches gilt für das zweite Kettenrad 3, bei dem zwischen Auflauf 13 und Auslauf 14 ein Umschlingungswinkel α von 90° aufgespannt wird. In diesem Bereich weisen die Gleitschienen 9,10 eine bogenförmige Gleitfläche 15 bzw. 16 auf. Der Abstand der Gleitflächen 15,16 zum zugehörigen Teilkreis T_{D} der Kettenräder 1 oder 3 beträgt im vorliegenden Fall gleich der halben Höhe H einer Lasche 17 der Duplexkette 5. Es besteht aber auch die Möglichkeit, die Gleitschienen 9,10 mit ihrer Gleitfläche 15 bzw. 16 an die Rollen 18 der Duplexkette 5 anzupassen, so dass diese auf der Gleitfläche 15 oder 16 abrollen. Der Teilkreis T_{D} ist in der Fig. 1 bei jedem Kettenrad 1 und 3 eingezeichnet.

Die Gleitschienen 9,10 werden an einem ortsfesten Teil, z.B. des Motorgehäuses oder auf einem Lagersitzabschnitt befestigt und stehen relativ zu den Kettenrädern 1,3 still. In dem Zwischenstück 19, das im Wesentlichen die Länge A aufweist, wird die Duplexkette 5 nicht mehr von dem Kettenrad 1 oder 3 abgestützt. Damit es in diesem Bereich 19 nicht zu unnötigen Schwingungen kommt, weisen die Gleitschienen 9,10 jeweils eine Übergabeverlängerung 20 bzw. 21 auf. Die Übergabeverlängerung 20,21 hat die Form einer Nase bzw. eines Dreieckes, wobei die Gleitfläche der Übergabeverlängerung 20,21 tangential in die übrige Gleitfläche 15 bzw. 16 der Gleitschienen 9,10 übergeht. Die Gleitfläche der Übergabeverlängerung 20,21 verläuft im Wesentlichen geradlinig. Aus Fig. 1 ist zu erkennen, dass sich die beiden Übergabeverlängerungen 20,21 überschneiden, so dass im Bereich des Zwischenstücks 19 beide Spuren 7,8 der Duplexkette 5 unterstützt sind.

Die beiden Gleitschienen 9,10 sorgen jeweils dafür, dass keine Kippmomente auf die Duplexkette 5 einwirken und es somit insbesondere bei Auflaufen auf ein Kettenrad bzw. Auslaufen von einem Kettenrad nicht zu übermäßigen Schwingungen kommt. Die Gleitschienen 9,10 können z.B. aus einem verschleißfesten Kunststoff bestehen. Es besteht aber auch die Möglichkeit, sie aus einem z.B. Aluminiumgrundkörper zu fertigen und mit einem unter Umständen abnehmbaren Gleitbelag zu beaufschlagen. Die die Übergabeverlängerung 20,21 begrenzende Unterseite 22,23 der Gleitschienen 9,10 ist jeweils an die Außenkontur des angrenzenden Kettenrades 1 bzw. 3 angepasst und in geringem Abstand zu diesem angeordnet. Hierdurch lässt sich auch die Übergabeverlängerung 20,21 sehr stabil ausgestalten. Die Gleitschienen 9,10 sind jeweils bis zur Höhe des Auflaufs 11 bzw. Auslaufs 14 heruntergezogen und weisen im Wesentlichten eine Bogenform mit der einseitig angeordneten Übergabeverlängerung 20,21 auf. Eine Fachwerkstruktur erhöht die Stabilität bei geringem Gewicht.

Durch die Verwendung der Gleitschienen 9,10 lassen sich relativ große Überdeckungsbereiche 6 erzeugen, da die Begrenzung der Überdeckungen lediglich von der Größe der Nockenwellen 2,4 abhängt.

Bis auf die speziell angeformten Gleitschienen 9 und 10 werden bei dem vorliegenden Aufbau nur gängige Maschinenelemente verwendet, so dass mit wenigen Modifikationen die erfindungsgemäße Anordnung geschaffen werden kann.

## Patentansprüche

1. Kettentrieb, insbesondere Nockenwellen/Nockenwellentrieb für einen Kraftfahrzeugmotor, mit mindestens zwei Kettenrädern (1,3) und einer Antriebskette (5), wobei mindestens zwei Kettenräder (1,3) in Achsrichtung seitlich zueinander versetzt angeordnet sind, die Antriebskette (5) eine Mehrfachkette ist, jedem der versetzten Kettenräder (1,3) durch den seitlichen Versatz eine eigene Spur (7,8) der Mehrfachkette (5) zugeordnet ist und sich die Kopfkreisdurchmesser (d_{K}) der versetzten Kettenräder (1,3) überdecken, **dadurch gekennzeichnet, dass** seitlich neben den Verzahnungen der überdeckenden Kettenräder (1,3) jeweils eine Abstützeinrichtung (9,10) für die nicht mit dem zugeordneten Kettenrad (1,3) in Eingriff stehende Leerspur der Mehrfachkette (5) vorgesehen ist.

2. Kettentrieb nach Anspruch 1, **dadurch gekennzeichnet, dass** eine Überdeckung (d_{K} - A) der Kettenräder (1,3) größer ist als die Summe aus der Höhe (H) der Laschen (17) der Mehrfachkette (5) und der Differenz aus Kopfkreisradius (d_{K}/2) abzüglich Teilkreisradius (d_{D}/2).

3. Kettentrieb nach Anspruch 1 oder 2, **dadurch gekennzeichnet, dass** als Abstützeinrichtung Gleitschienen (9,10) vorgesehen sind.

4. Kettentrieb nach Anspruch 3, **dadurch gekennzeichnet, dass** ein Abstand der Gleitfläche (15,16) der Gleitschiene (9,10) zumindest im Bereich des Umschlingungswinkels (α) der Mehrfachkette (5) am zugeordneten Kettenrad (1,3) zu dem Teilkreis (T_{D}) des Kettenrades (1,3) im Wesentlichen der halben Laschenhöhe (H/2) oder einer halben Laufrollenhöhe entspricht.

5. Kettentrieb nach einem der Ansprüche 1 bis 4, **dadurch gekennzeichnet, dass** die Gleitschienen (9,10) eine Übergabeverlängerung (20,21) aufweist, die die Leerspur (7,8) der Mehrfachkette (5) in dem Teilstück (19) zwischen den überdeckenden Kettenrädern (1,3) unterstützt.

6. Kettenrad nach Anspruch 5, **dadurch gekennzeichnet, dass** sich die Übergabeverlängerung (20,21) der den überdeckenden Kettenrädern (1,3) zugeordneten Gleitschienen (9,10) überdecken und gemeinsam die Mehrfachkette (5) in dem Teilstück (19) zwischen den überdeckenden Kettenrädern (1,3) unterstützen.

7. Kettentrieb nach Anspruch 5 oder 4, **dadurch gekennzeichnet, dass** eine Gleitfläche der Übergabeverlängerung (20,21) tangential in die angrenzende restliche Gleitfläche (15,16) der Gleitschiene (8,9) übergeht.

8. Kettentrieb nach einem der Ansprüche 5 bis 7, **dadurch gekennzeichnet, dass** eine zumindest die Übergabeverlängerung (20,21) begrenzende Unterseite (22,23) der Gleitschiene (9,10) bogenförmig an die Außenkontur des anderen Kettenrads (1,3) angepasst ist.

9. Kettentrieb nach Anspruch 1 bis 8, **dadurch gekennzeichnet, dass** die Mehrfachkette (5) zwischen dem Auflauf (11) auf das erste Kettenrad (1) und dem Auslauf (14) aus dem zweiten Kettenrad (3) vollständig abgestützt ist.

10. Kettentrieb nach einem der Ansprüche 1 bis 9, **dadurch gekennzeichnet, dass** die Kettenräder (1,3) die gleiche Größe und Zähnezahl aufweisen.

## Claims

1. A chain drive, in particular camshaft/camshaft drive for an automotive engine, comprising at least two chain gears (1, 3) and a drive chain (5), at least two chain gears (1, 3) being arranged in laterally offset relationship with one another in axial direction, said drive chain (5) being a multiple-track chain, each of said offset chain gears (1, 3) having assigned thereto a separate track (7, 8) of said multiple-track chain (5) due to the lateral offset, and the tip diameters (d_{K}) of said offset chain gears (1, 3) being overlapping **characterized in that** at the side next to the gearings of the overlapping chain gears (1, 3) a support means (9, 10) is respectively provided for the idle track of said multiple-track chain (5) which is not in engagement with the associated chain gear (1, 3).

2. The chain drive according to claim 1, **characterized in that** an overlap (d_{K}-A) of said chain gears (1, 3) is greater than the sum of the height (H) of the plates (17) of said multiple-track chain (5) and of the difference of tip circle radius (d_{K}/2) less pitch circle radius (d_{D}/2).

3. The chain drive according to claim 1 or 2, **characterized in that** slide rails (9, 10) are provided as support means.

4. The chain drive according to claim 3, **characterized in that** a distance of the slide surface (15, 16) of said slide rail (9, 10) substantially corresponds to half the plate height (H/2) or half the roller height at least in the area of the wrap angle (α) of said multiple-track chain (5) on the associated chain gear (1, 3) relative to the pitch circle (T_{D}) of said chain gear (1, 3).

5. The chain drive according to any one of claims 1 to 4, **characterized in that** said slide rails (9,10) have a transfer extension (20, 21) which supports the idle track (7,8) of said multiple-track chain (5) in the section (19) between said overlapping chain gears (1, 3).

6. The chain drive according to claim 5, **characterized in that** said transfer extension (20, 21) of said slide rails (9,10) assigned to said overlapping chain gears (1, 3) are overlapping and jointly support said multiple-track chain (5) in said section (19) between said overlapping chain gears (1, 3)

7. The chain drive according to claim 5 or 6, **characterized in that** a slide surface of said transfer extension (20, 21) passes tangentially into the adjoining remaining slide surface (15, 16) of said slide rail (8, 9).

8. The chain drive according to any one of claims 5 to 7, **characterized in that** a bottom side (22, 23) of said slide rail (9,10) which defines at least said transfer extension (20, 21) is arcuately adapted to the outer contour of said other chain gear (1, 3).

9. The chain drive according to claims 1 to 8, **characterized in that** said multiple-track chain (5) is completely supported between an entry point (11) on said first chain gear (1) and an exit point (14) from said second chain gear (3).

10. The chain drive according to any one of claims 1 to 9, **characterized in that** said chain gears (1, 3) have the same size and tooth number.

## Revendications

1. Dispositif d'entraînement à chaîne, notamment dispositif d'entraînement à arbre à cames/arbre à cames pour un moteur de véhicule automobile, comportant au moins deux roues à chaîne (1, 3) et une chaîne motrice (5), dans lequel au moins deux roues à chaîne (1, 3) sont disposées en étant décalées latéralement dans la direction axiale, la chaîne motrice (5) est une chaîne multiple, un brin particulier (7, 8) de la chaîne multiple (5) est associé à chacune des roues à chaîne décalées (1, 3) au moyen d'un décalage latéral, et les diamètres (d_{K}) du cercle de couronne des roues à chaîne décalées (1, 3) se chevauchent, **caractérisé en ce qu'**il est prévu latéralement, à côté des dentures des roues à chaîne en recouvrement (1, 3), respectivement un dispositif d'appui. (9, 10) pour le brin vide de la chaîne multiple (5), qui n'est pas en prise avec la roue à chaîne associée (1, 3).

2. Dispositif d'entraînement à chaîne selon la revendication 1, **caractérisé en ce qu'**un recouvrement (d_{K} - A) des roues à chaîne (1, 3) est supérieur à la somme de la hauteur (H) des maillons (17) de la roue à chaîne multiple (5) et de la différence entre le rayon (d_{K}/2) du cercle de couronne et le rayon (d_{D}/2) du cercle primitif.

3. Dispositif d'entraînement à chaîne selon la revendication 1 ou 2, **caractérisé en ce que** des glissières (9, 10) sont prévues comme dispositif d'appui.

4. Dispositif d'entraînement à chaîne selon la revendication 3, **caractérisé en ce qu'**une distance entre la surface de glissement (15, 16) de la glissière (9, 10) et le cercle primitif (T_{D}) de la roue à chaîne (1, 3) correspond, au moins dans la zone de l'angle d'enroulement (α) de la chaîne multiple (5) sur la roue dentée associée (1, 3), essentiellement à la moitié de la hauteur de maillon (H/2) ou à une demi-hauteur de rouleau de roulement.

5. Dispositif d'entraînement à chaîne selon l'une des revendications 1 à 4, **caractérisé en ce que** les glissières (9, 10) possèdent un prolongement de transfert (20, 21), qui soutient le brin vide (7, 8) de la chaîne multiple (5) dans la partie (19) entre les roues à chaîne (1, 3) en recouvrement.

6. Roue à chaîne selon la revendication 5, **caractérisée en ce que** le prolongement de transfert (20, 21) des glissières (9, 10) associées aux roues à chaîne en recouvrement (1, 3) se recouvrent et supportent conjointement la chaîne multiple (5) dans la partie (19) située entre les roues à chaîne en recouvrement (1, 3).

7. Dispositif d'entraînement à chaîne selon la revendication 5 ou 4, **caractérisé en ce qu'**une surface de glissement du prolongement de transfert (20, 21) se prolonge tangentiellement par la surface de glissement restante contiguë (15, 16) de la glissière (8, 9).

8. Dispositif d'entraînement à chaîne selon l'une des revendications 5 à 7, **caractérisé en ce qu'**une face inférieure (22, 23) de la glissière (9, 10), qui délimite au moins le prolongement de transfert (20, 21), est adaptée, avec une forme arquée, au contour extérieur de l'autre roue à chaîne (1, 3).

9. Dispositif d'entraînement à chaîne selon les revendications 1 à 8, **caractérisé en ce que** la chaîne multiple (5) est entièrement supportée entre son arrivée (11) sur la première roue à chaîne (1) et la sortie (14) à partir de la deuxième roue à chaîne (3).

10. Dispositif d'entraînement à chaîne selon l'une des revendications 1 à 9, **caractérisé en ce que** les roues à chaîne (1, 3) possèdent la même taille et le même nombre de dents.
